# EUROPÄISCHE PATENTANMELDUNG

(11) **EP 2 689 985 A1**
(43) Veröffentlichungstag der Anmeldung: **29.01.2014**
(21) Anmeldenummer: 13172215.9
(22) Anmeldetag: 17.06.2013
(51) Int. Cl.: B61D 17/04

(54) **Versteifung eines flächigen Elements, insbesondere eines flächigen Außenwandelements eines weggebundenen Fahrzeugs**

(30) Priorität: 24.07.2012 DE 102012212973
(71) Anmelder: Siemens Aktiengesellschaft, 80333 München (DE)
(72) Erfinder: Langert, Wolfgang, 46499 Hamminkeln (DE)

(57) **Zusammenfassung**

Es ist ein Versteifungselement (16) zum Versteifen eines flächigen Elements (12), insbesondere eines flächigen Außenwandelements (12) eines weggebundenen Fahrzeugs, beschrieben. Das Versteifungselement (16) weist einen Grundkörper (18), einen ersten Randabschnitt (26) und einen zweiten Randabschnitt (28) auf, wobei der erste Randabschnitt (26) und der zweite Randabschnitt (28) an gegenüberliegenden Endabschnitten (30, 32) des Grundkörpers (18) angeordnet sind, wobei der erste Randabschnitt (26) und zweite Randabschnitt (28) jeweils zumindest eine Ausnehmung (34a-34f, 36a-36f) aufweisen, die sich ausgehend von einem äußeren Rand (38, 40) des ersten Randabschnitts (26) bzw. des zweiten Randabschnitts (28), der sich entlang der Längserstreckung des ersten Randabschnitts (26) bzw. des zweiten Randabschnitts (28) erstreckt, in ein Inneres (42, 44) des ersten Randabschnitts (26) bzw. des zweiten Randabschnitts (28) erstreckt. Dadurch kann das flächige Element (12) auf einfache und kostengünstige Weise versteift werden.

## Beschreibung

Die Erfindung betrifft ein Versteifungselement zum Versteifen eines flächigen Elements, eine Anordnung zum Versteifen eines flächigen Elements und ein Verfahren zum Versteifen eines flächigen Elements.

Es ist aus der Praxis bekannt, dass flächige Außenwandelemente einer Außenhülle eines als Schienenfahrzeug ausgebildeten weggebundenen Fahrzeugs, die einen Zugrohbau bedeckt, während des Betriebs erhöhten aerodynamischen Drücken und mechanischen Lasten ausgesetzt sind, die die Lebensdauer der Außenwandelemente verringern können. Ein Verschweißen eines Versteifungselements mit einer Innenseite eines flächigen Außenwandelements des Schienenfahrzeugs kann eine zusätzliche mechanische Stabilisierung der Außenhülle des Schienenfahrzeugs gewährleisten, so dass die Lebensdauer des entsprechenden Außenwandelements erhöht sein kann.

Während und/oder infolge von Schweißarbeiten an der Innenseite des flächigen Außenwandelements, mittels denen das Versteifungselement an dem Außenwandelement verschweißt wird, kann es aufgrund von thermischen und mechanischen Belastungen, die durch den Schweißprozess verursacht werden, zu einem optisch sichtbaren Verzug bzw. einer optisch sichtbaren Verwerfung des flächigen Außenwandelements im Bereich der Schweißnaht kommen. Dieser Verzug bzw. diese Verwerfung kann beispielsweise durch eine Verformung oder ein partielles Schrumpfen des Versteifungselements hervorgerufen werden.

Daher ist es zur optischen Korrektur notwendig, dass das flächige Außenwandelement im Bereich von Sichtflächen des flächigen Außenwandelements, also an einer Außenseite des flächigen Außenwandelements, im Anschluss an die Schweißarbeiten mechanisch entbeult und/oder eine Formkontur des flächigen Außenwandelements durch Aufspachteln einer Spachtelmasse geglättet wird. Im Anschluss daran kann die sichtbare Außenseite des flächigen Außenwandelements lackiert werden.

Diese zusätzlichen Arbeitsschritte zur optischen Korrektur der Sichtflächen des flächigen Außenwandelements sind kosten- und zeitaufwändig.

Es ist eine Aufgabe der Erfindung, Maßnahmen bereitzustellen, mit deren Hilfe ein flächiges Element, insbesondere ein flächiges Außenwandelement eines weggebundenen Fahrzeugs, auf einfache und kostengünstige Weise versteift werden kann.

Die Aufgabe wird durch ein Versteifungselement zum Versteifen eines flächigen Elements, eine Anordnung zum Versteifen eines flächigen Elements und ein Verfahren zum Versteifen eines flächigen Elements gemäß den unabhängigen Ansprüchen gelöst. Vorteilhafte Ausgestaltungen sind in den Unteransprüchen angegeben.

In Kontext der vorliegenden Anmeldung kann der Begriff "weggebundenes Fahrzeug" insbesondere ein in seiner Fahrtrichtung oder Spur festgelegtes Fahrzeug bezeichnen. Insbesondere kann das Fahrzeug (ausschließlich) bidirektional bewegbar sein.

Erfindungsgemäß ist ein Versteifungselement zum Versteifen eines flächigen Elements, insbesondere eines flächigen Außenwandelements eines weggebundenen Fahrzeugs, vorgesehen, wobei das Versteifungselement einen Grundkörper, einen ersten Randabschnitt und einen zweiten Randabschnitt aufweist, wobei der erste Randabschnitt und der zweite Randabschnitt an gegenüberliegenden Endabschnitten des Grundkörpers angeordnet sind, wobei der erste Randabschnitt und der zweite Randabschnitt jeweils zumindest eine Ausnehmung aufweisen, die sich ausgehend von einem äußeren Rand des ersten Randabschnitts bzw. des zweiten Randabschnitts, der sich entlang der Längserstreckung des ersten Randabschnitts bzw. des zweiten Randabschnitts erstreckt, in ein Inneres des ersten Randabschnitts bzw. des zweiten Randabschnitts erstreckt.

Unter dem Begriff "Rand" kann insbesondere eine Kante oder eine Kantenfläche verstanden werden.

Unter dem Begriff "Inneres" eines Randabschnitts kann insbesondere ein Bereich des Randabschnitts verstanden werden, der von einer äußeren Fläche, beispielsweise einer freiliegenden Oberfläche des Randabschnitts, beabstandet angeordnet sein kann. Beispielsweise kann das Innere des Randabschnitts in einer Tiefenrichtung der zumindest einen Ausnehmung gesehen oder entlang einer Längserstreckung der zumindest einen Ausnehmung gesehen jeweils in dem Randabschnitt benachbart zu der zumindest einen Ausnehmung angeordnet sein.

Erfindungsgemäß können ein erster Randabschnitt und ein zweiter Randabschnitt eines Versteifungselements jeweils zumindest einen Bereich mit geringerer Breitenerstreckung, also mit der zumindest einen Ausnehmung, und zumindest einen Bereich mit größerer Breitenerstreckung, beispielsweise einen laschenartigen Bereich oder eine Lasche, aufweisen. Unter den Begriffen "laschenartiger Bereich" und "Lasche" können dabei insbesondere ein von einer Grundlinie vorspringender flügelartiger Abschnitt verstanden werden, der insbesondere elastisch verformbar ausgebildet und/oder aus einer durch die zumindest eine Ausnehmung definierte Ebene abknickbar sein kann. Der erste bzw. zweite Randabschnitt kann im Falle einer zweiseitig begrenzten Ausnehmung einen laschenartigen Bereich und im Falle einer dreiseitig begrenzten Ausnehmung zwei laschenartige Bereiche aufweisen.

Ein Verschweißen des Versteifungselements mit dem flächigen Element kann in einem innenseitigen Bereich der zumindest einen Ausnehmung erfolgen. Beispielsweise kann der innenseitige Bereich durch eine die zumindest einen Ausnehmung begrenzende Bodenwand und/oder einen oder mehrere Seitenwandabschnitte einer die zumindest eine Ausnehmung begrenzende Seitenwand oder Seitenwänden gebildet sein, der oder die beabstandet von einer Öffnung der zumindest einen Ausnehmung angeordnet sein kann oder können. Dabei kann die Bodenwand der Ausnehmung einem zurückversetzten Abschnitt des äußeren Rands entsprechen. Das Versteifungselement kann in einem randseitigen Bereich der zumindest einen Ausnehmung frei von einer Verschweißung an dem Element angeordnet sein. Beispielweise kann ein randseitiger Bereich durch Seitenwandabschnitte der Seitenwand oder der Seitenwände gebildet sein, die sich an die Öffnung der zumindest einen Ausnehmung anschließen können.

Aufgrund der Verschweißung des Versteifungselement mit dem Außenwandelement im innenseitigen Bereich der zumindest einen Ausnehmung des ersten bzw. zweiten Randabschnitts kann ein Grad eines schweißtechnisch bedingten Abknickens des formgebenden flächigen Elements, wie es beispielsweise bei einem Versteifungselement mit einem Randabschnitt frei von Ausnehmungen auftreten kann, reduziert oder ein solches Abknicken verhindert werden, da die Bereiche des ersten und zweiten Randabschnitts, die frei von der Ausnehmung und benachbart zu der zumindest einen Ausnehmung angeordnet sein können, als stabilisierende Trage- oder Anlageflächen für das flächige Element dienen können. Diese Bereiche können folglich das flächige Element abstützen, so dass eine Beulenbildung im Bereich der Schweißnaht zwischen dem Versteifungselement und dem flächigen Element verhindert werden kann.

Aufgrund der zusätzlichen mechanischen Stabilisierung des flächigen Elements während der Schweißarbeiten können aufwändige Spachtel- und Ausbeularbeiten an dem flächigen Element, insbesondere an einer Innenseite eines flächigen Außenwandelements eines weggebundenen Fahrzeugs, nach Abschluss der Schweißarbeiten entfallen, so dass eine kostengünstige und zeitsparende mechanische Stabilisierung und Versteifung des flächigen Elements bewerkstelligt sein kann.

Insbesondere können der laschenartige Bereich oder die laschenartigen Bereiche des ersten und/oder zweiten Randabschnitt, die die zumindest eine Ausnehmung begrenzen, elastisch verformbar sein und/oder formschlüssig an dem Element anlegbar sein und/oder eine geeignete Vorspannkraft auf das Element aufbringen, um eventuell auftretende Unebenheiten oder Beulen beim Schweißprozess auszugleichen und das zu versteifende Element mechanisch stabilisieren.

Die zumindest eine Ausnehmung des ersten Randabschnitts und die zumindest eine Ausnehmung des zweiten Randabschnitts können sich bezüglich einer Längserstreckung des Versteifungselements gesehen gegenüberliegen, so dass eine beidseitige gleichförmige mechanische Stabilisierung des flächigen Elements während des Schweißprozesses erreicht werden kann. Insbesondere kann die Längserstreckung des Versteifungselements der Längserstreckung des ersten bzw. zweiten Randabschnitts und/oder der Längserstreckung des äußeren Rands des ersten bzw. zweiten Randabschnitts entsprechen.

Die zumindest eine Ausnehmung des ersten Randabschnitts bzw. des zweiten Randabschnitts kann einen viereckigen Querschnitt, insbesondere einen rechteckigen Querschnitt, weiter insbesondere einen quadratischen Querschnitt, aufweisen. Dabei kann der Querschnitt quer, insbesondere senkrecht, zu einer Normalen auf eine Oberfläche des ersten bzw. zweiten Randabschnitts gemessen sein, also in einer Ebene des ersten bzw. zweiten Randabschnitts liegen. Diese Maßnahme kann eine besonders einfache und kostengünstige Fertigung des Versteifungselements ermöglichen, da die zumindest eine Ausnehmung des ersten bzw. zweiten Randabschnitts mittels einfacher Maßnahmen, beispielsweise mittels Stanzens, in den ersten bzw. zweiten Randabschnitt eingebracht werden kann. Ferner kann der Schweißprozess vereinfacht werden, da aufgrund der definierten geometrischen Formgebung der innenseitige Bereich der zumindest einen Ausnehmung besonders einfach identifiziert und mit dem flächigen Element verschweißt werden kann.

Insbesondere kann eine Längserstreckung des eckigen Querschnitts der zumindest einen Ausnehmung einer Längserstreckung des ersten bzw. zweiten Randabschnitts entsprechen, so dass eine längere Seite des eckigen Querschnitts im Wesentlichen in Richtung der Längserstreckung des ersten bzw. zweiten Randabschnitts verlaufen kann. Dies kann den Schweißprozess weiter vereinfachen, da ein verwendetes Schweißgerät einfach in dem Querschnitt bewegbar sein kann.

Die zumindest eine Ausnehmung des ersten Randabschnitts bzw. des zweiten Randabschnitts kann in einer Richtung zum Inneren des ersten Randabschnitts bzw. des zweiten Randabschnitts konkav gewölbt, insbesondere halbzylinderförmig gewölbt, ausgebildet sein, so dass Spannungsrisse einer gebildeten Schweißnaht an Ecken der zumindest einen Ausnehmung verhindert werden können. Dies kann entlang des innenseitigen Bereichs der zumindest einen Ausnehmung gesehen eine gleichförmig mechanisch stabile Verschweißung zwischen dem Versteifungselement und dem flächigen Element bewirken.

Der erste Randabschnitt und der zweite Randabschnitt können jeweils eine Vielzahl von Ausnehmungen aufweisen, wobei sich Ausnehmungen der Vielzahl von Ausnehmungen ausgehend von dem äußeren Rand des ersten Randabschnitts bzw. des zweiten Randabschnitts in das Innere des ersten Randabschnitts bzw. des zweiten Randabschnitts erstrecken können. Die Ausnehmungen der Vielzahl von Ausnehmungen des ersten bzw. zweiten Randabschnitts können gemäß einer oder mehrerer der oben beschriebenen Ausführungsformen ausgebildet und/oder angeordnet sein. Das Versteifungselement kann aufgrund der wiederkehrenden Profilierung des ersten bzw. zweiten Randabschnitts entlang einer Längserstreckung des ersten bzw. zweiten Randabschnitts eine mechanische Stabilisierung des flächigen Elements bewirken, so dass großflächig ein schweißbedingter Verzug oder eine schweißbedingte Verformung des Elements verhindert werden kann. Insbesondere kann der erste bzw. der zweite Randabschnitt ein Sägezahnprofil oder ein Stufenprofil aufweisen, das sich entlang der Längserstreckung des ersten bzw. zweiten Randabschnitts erstrecken kann. Insbesondere können äußere Stirnflächen des ersten bzw. zweiten Randabschnitts flach, gewölbt und/oder an eine Formgebung anstoßender Bauteile angepasst geformt ausgebildet sein.

Eine Längserstreckung einer Ausnehmung oder aller Ausnehmungen des ersten Randabschnitts bzw. des zweiten Randabschnitts, die entlang der Längserstreckung des ersten Randabschnitts bzw. des zweiten Randabschnitts gemessen sein kann, kann kleiner als ein Abstand zwischen benachbarten Ausnehmungen der Vielzahl von Ausnehmungen sein, der in der Richtung der Längserstreckung des ersten Randabschnitts bzw. des zweiten Randabschnitts gemessen sein kann. Insbesondere kann der Abstand der Längserstreckung des äußeren Rands und/oder einer Längserstreckung des zwischen den beiden benachbarten Ausnehmungen angeordneten laschenartigen Bereichs entsprechen. Dadurch kann eine besonders große Anlagefläche oder Abstützfläche des Versteifungselements für das flächige Element bei ausreichend stabiler Verschweißung innenseitig in den Ausnehmungen bewerkstelligt sein.

Die Ausnehmungen der Vielzahl von Ausnehmungen können entlang der Längserstreckung des ersten Randabschnitts bzw. des zweiten Randabschnitts gesehen zueinander im Wesentlichen äquidistant, also gleich beabstandet, angeordnet sein. Dadurch kann eine besonders einfache und/oder automatisierte Fertigung des Versteifungselements und/oder eine besonders einfache und/oder automatisierte Verschweißung des Versteifungselements mit dem flächigen Element, insbesondere mittels Schrittschweißens oder schrittweisen Schweißens, ermöglicht sein.

Der erste Randabschnitt und/oder der zweite Randabschnitt können jeweils zumindest eine Ausbuchtung oder eine Vielzahl von Ausbuchtungen aufweisen. Die Ausbuchtung kann bzw. Ausbuchtungen der Vielzahl von Ausbuchtungen können bezüglich des äußeren Rands des ersten Randabschnitts und/oder des zweiten Randabschnitts nach außen vorspringen. Dadurch kann eine Anlagefläche des Versteifungselements für das abzustützende flächige Element vergrößert sein. Insbesondere können die Ausbuchtung bzw. die Ausbuchtungen zusätzlich zum verbleibenden ersten bzw. zweiten Randabschnitt elastisch verformbar sein, um die mechanische Stabilisierung des flächigen Elements während des Schweißvorgangs weiter zu verbessern.

Insbesondere kann ein Querschnitt der zumindest einen Ausbuchtung eckig, insbesondere rechteckig, weiter insbesondere quadratisch, ausgebildet sein. Alternativ oder zusätzlich kann die zumindest eine Ausbuchtung konvex gewölbt, insbesondere halbzylinderförmig gewölbt, ausgebildet sein. Insbesondere können sich ebenfalls eine Ausbuchtung des ersten Randabschnitts und eine Ausbuchtung des zweiten Randabschnitts paarweise gegenüberliegen.

Der Grundkörper kann gewinkelt, insbesondere zweifach gewinkelt oder im Wesentlichen U-förmig gebogen ausgebildet sein, wobei der erste Randabschnitt und der zweite Randabschnitt an Endabschnitten von Schenkeln des Grundkörpers angeordnet und bezüglich der Schenkel nach außen umgebogen sein können. Dadurch können der erste Randabschnitt und der zweite Randabschnitt bei dem Schweißvorgang leicht zugänglich sein, so dass der Schweißvorgang vereinfacht sein und besonders genau durchgeführt werden kann. Insbesondere kann eine Tiefenerstreckung oder Tiefe des Grundkörpers, die entlang einer Längserstreckung der Schenkel und/oder in eine Richtung quer, insbesondere senkrecht, zu einer Erstreckung des ersten bzw. zweiten Randabschnitts gemessen sein kann, eine Steifigkeit des Grundkörpers bestimmen, so dass der Grad des schweißbedingten Verzerrens oder Verformens des Grundkörpers und damit des flächigen Elements und/oder eines betriebsbedingten Verformens des Elements weiter reduziert oder ein solches Verzerren und/oder Verformens während des Betriebs verhindert werden kann.

Insbesondere können sich der erste und zweite Randbereich im Wesentlichen in einer gemeinsamen Ebene erstrecken, so dass ein flaches Element mittels des Versteifungselements versteift sein kann. Alternativ können der erste und/oder zweite Randbereich eine solche Formgebung aufweisen, die an eine Formgebung des flächigen Elements angepasst sein kann. Dabei können beispielsweise der erste und/oder zweite Brandbereich gewölbt ausgebildet sein.

Insbesondere kann der Körper im Falle seiner zweifachgewinkelten Ausgestaltung oder seiner im Wesentlichen U-förmigen einen im Wesentlichen U-förmigen Querschnitt aufweisen, und der erste und zweite Randabschnitt können unter einem Winkel von im Wesentlichen 90° bezüglich der Schenkel des Grundkörpers nach außen umgebogen sein. Dies bewirkt eine besonders stabile Ausgestaltung des hutähnlichen Versteifungselements.

Insbesondere kann das Versteifungselement einstückig ausgebildet sein.

Insbesondere kann das Versteifungselement mit einer im Wesentlichen konstanten Dicke ausgebildet sein, die derart bemessen sein kann, dass das Versteifungselement eine ausreichende Steifigkeit aufweisen und unanfällig gegenüber und/oder frei von Verformungen während des Schweißprozesses sein kann. Dies kann eine besonders einfache Bauweise des Versteifungselements ermöglichen.

Alternativ können der erste Randabschnitt, der zweite Randabschnitt und/oder der Grundköper voneinander unterschiedliche Dicken aufweisen, die insbesondere jeweils konstant sein können. Die jeweilige Dicke des ersten Randabschnitts, des zweiten Randabschnitts bzw. des Grundkörpers kann derart ausgewählt sein, dass der erste Randabschnitt, der zweite Randabschnitt bzw. der Grundkörper eine ausreichende Steifigkeit aufweisen kann und der erste und/oder zweite Randabschnitt unanfällig gegenüber und/oder frei von Verformungen während des Schweißprozesses sein können.

Das Versteifungselement kann Metall, insbesondere Blech, aufweisen oder daraus ausgebildet sein.

Der Grundkörper kann zumindest eine Aufnahme für ein Befestigungselement zum, insbesondere direkten oder indirekten, Befestigen eines weiteren Elements, insbesondere eines Innenwandverkleidungselements des weggebundenen Fahrzeugs, aufweisen. Die Aufnahme für das Befestigungselement kann insbesondere als Durchgangsöffnung ausgebildet sein, in der beispielsweise eine Einlegmutter als Gewindeträger aufgenommen sein kann, in der eine entsprechende Schraube zum Befestigen des weiteren Elements verschraubbar sein kann. Ein indirektes Befestigen eines weiteren Elements kann ein Befestigen des weiteren Elements mit dem Versteifungselement mittels mehrerer dazwischen angeordneter Elemente, beispielsweise Abstandsplatten oder Abstandshalter, darstellen.

Die Erfindung betrifft ferner eine Anordnung zum Versteifen eines flächigen Elements, insbesondere eines flächigen Außenwandelements eines weggebundenen Fahrzeugs, wobei die Anordnung das flächige Element und ein oben beschriebenes Versteifungselement zum Versteifen des flächigen Elements aufweist, wobei das Versteifungselement mit dem flächigen Element in einem innenseitigen Bereich von zumindest einer Ausnehmung eines ersten Randabschnitts bzw. eines zweiten Randabschnitts des Versteifungselements verschweißt ist, die sich ausgehend von einem äußeren Rand des ersten Randabschnitts bzw. des zweiten Randabschnitts, der sich entlang der Längserstreckung des ersten Randabschnitts bzw. des zweiten Randabschnitts erstreckt, in ein Inneres des ersten Randabschnitts bzw. des zweiten Randabschnitts erstreckt.

Die Erfindung betrifft ferner ein weggebundenes Fahrzeug, das eine oben beschriebene Anordnung zum Versteifen eines flächigen Elements, insbesondere eines flächigen Außenwandelements des weggebundenen Fahrzeugs, aufweist. Insbesondere kann das weggebundene Fahrzeug als Schienenfahrzeug, beispielsweise als Zug oder Hochgeschwindigkeitszug, ausgebildet sein. Alternativ kann das weggebundene Fahrzeug als Magnetschwebebahn oder als Luftkissenschwebebahn ausgebildet sein.

Die Erfindung betrifft ferner ein Verfahren zum Versteifen eines flächigen Elements, insbesondere eines flächigen Außenwandelements eines weggebundenen Fahrzeugs, wobei das Verfahren Bereitstellen des flächigen Elements, Bereitstellen eines oben beschriebenen Versteifungselements zum Versteifen des flächigen Elements, Anordnen eines ersten Randabschnitts und eines zweiten Randabschnitts des Versteifungselements an dem flächigen Element und Verschweißen des Versteifungselements mit dem flächigen Element in einem innenseitigen Bereich von zumindest einer Ausnehmung des ersten Randabschnitts bzw. des zweiten Randabschnitts, die sich ausgehend von einem äußeren Rand des ersten Randabschnitts bzw. des zweiten Randabschnitts, der sich entlang der Längserstreckung des ersten Randabschnitts bzw. des zweiten Randabschnitts erstreckt, in ein Inneres des ersten Randabschnitts bzw. des zweiten Randabschnitts erstreckt.

Die oben beschriebenen Ausführungsformen des Versteifungselements gelten auch für die erfindungsgemäße Anordnung, das erfindungsgemäße weggebundene Fahrzeug und das erfindungsgemäße Verfahren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei können die nachfolgend dargestellten Merkmale sowohl jeweils einzeln als auch in Kombination einen Aspekt der Erfindung darstellen. Es zeigen:
- Fig. 1: eine schematische perspektivische Ansicht einer Anordnung zum Versteifen eines flächigen Außenwandelements eines Schienenfahrzeugs gemäß einem Ausführungsbeispiel;
- Fig. 2: eine schematische perspektivische Ansicht eines Versteifungselements der Anordnung in Fig. 1;
- Fig. 3 und 4: schematische Querschnittansichten des Versteifungselements entlang von Linien III-III und IV-IV in Fig. 1.

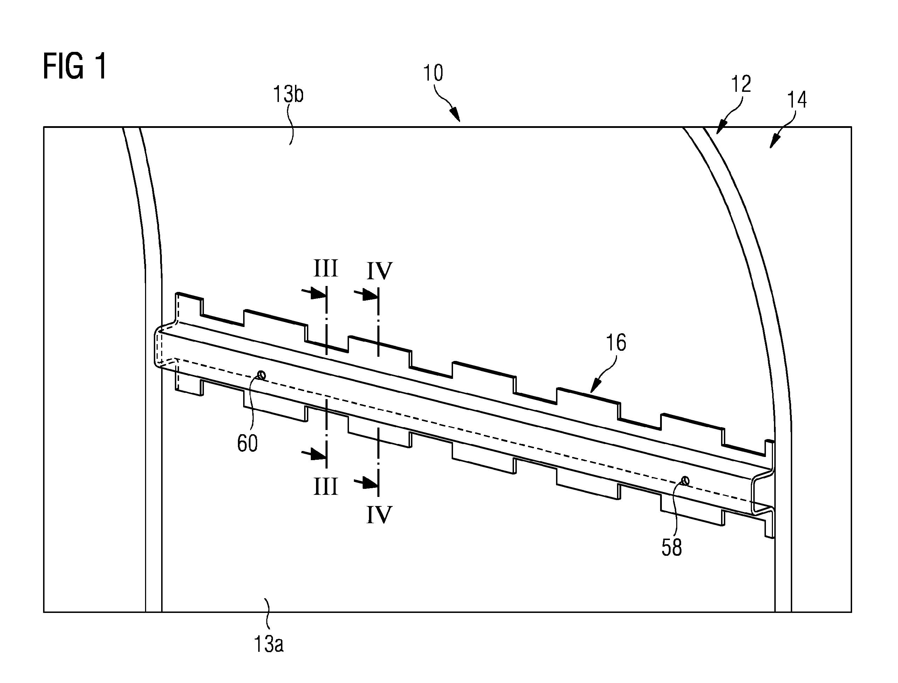

Eine Anordnung 10 zum Versteifen eines flächigen Außenwandelements 12 eines Schienenfahrzeugs 14 weist das flächige Außenwandelement 12 und ein Versteifungselement 16 zum Versteifen des flächigen Außenwandelements 12 auf, das mit einer Innenseite des Außenwandelements 12 verschweißt ist. Das Außenwandelement 12 ist als teilweise gebogene Platte mit einem ebenen Abschnitt 13a und einem halbzylinderförmig gebogenen Abschnitt 13b ausgebildet und Teil einer Außenhülle des Schienenfahrzeugs 14, der einen Zugrohbau des Schienenfahrzeugs 12 bedeckt. Das Versteifungselement 16, das in Fig. 1 von hinten gezeigt ist, ist entlang der gesamten Länge des Außenwandelements 12 im Übergangsbereich zwischen dem ebenen Abschnitt 13a und dem gebogenen Abschnitt 13b des Außenwandelements 12 am Außenwandelement 12 angeordnet.

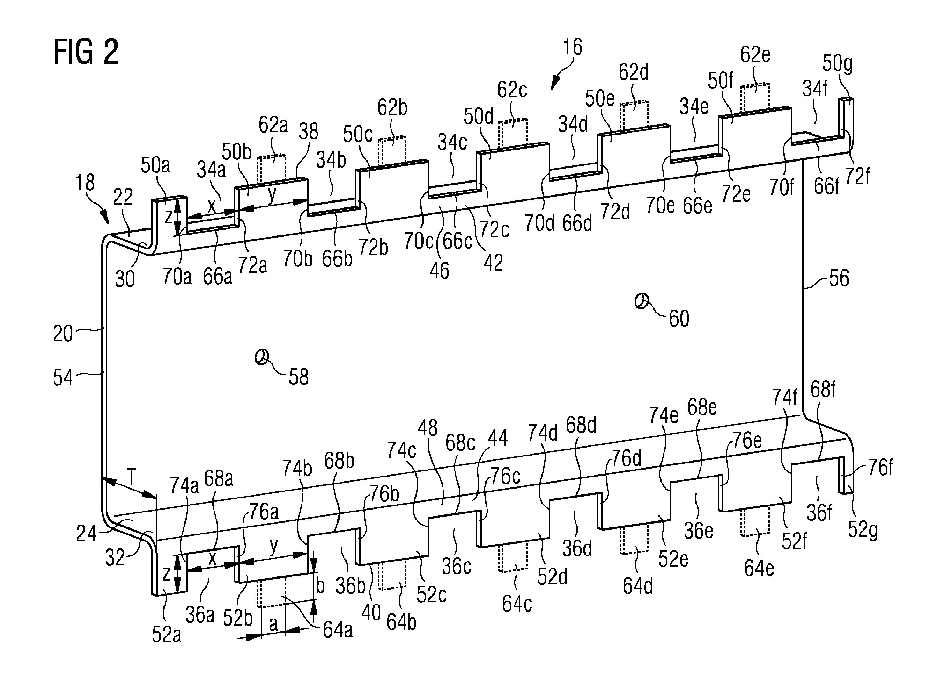

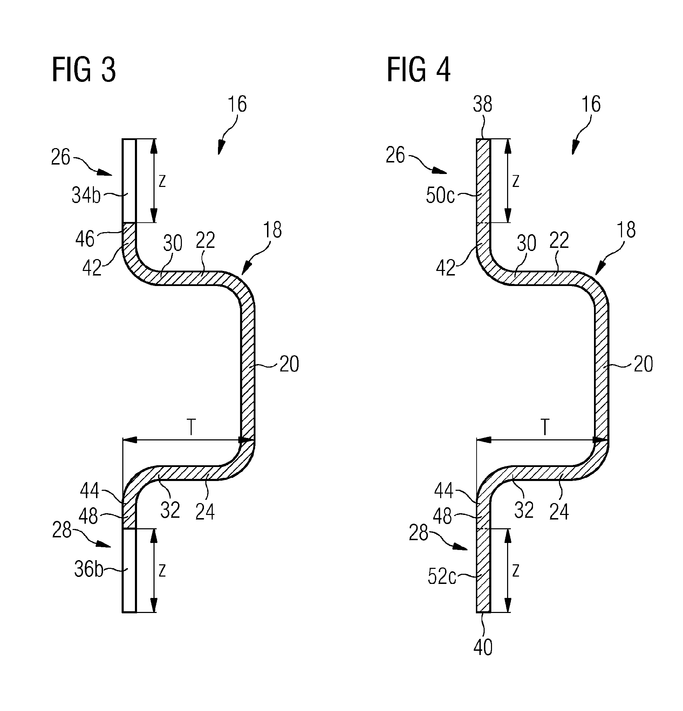

Das in Figuren 2-4 dargestellte Versteifungselement 16 weist einen U-förmigen Grundkörper 18 auf, der einen Verbindungsabschnitt 20, einen ersten Schenkel 22 und einen zweiten Schenkel 24 aufweist. Der erste und zweite Schenkel 22, 24 erstrecken sich im Wesentlichen parallel zueinander und senkrecht zum Verbindungsabschnitt 20. Ein streifenförmiger erster Randabschnitt 26 bzw. ein streifenförmiger zweiter Randabschnitt 28 des Versteifungselements 16 ist an einem Endabschnitt 30, 32 des ersten bzw. zweiten Schenkels 22, 24 angeordnet, der jeweils dem Verbindungsabschnitt 20 gegenüberliegt.

Das Versteifungselement 16 ist einstückig als Metallblech mit konstanter Dicke von z. B. 0,5 Zentimetern oder als Profil mit den Anforderungen entsprechenden Stegdicken des ersten Randabschnitts 26, des zweiten Randabschnitts 28 und des Grundkörpers 18 ausgebildet. Der erste bzw. zweite Randabschnitt 26, 28 ist bezüglich des ersten bzw. zweiten Schenkels 22, 24 des Grundkörpers 18 unter einem im Wesentlichen rechten Winkel nach außen umgebogen, so dass der erste bzw. zweite Randabschnitt 26, 28 voneinander wegweisen. Der erste und zweite Randabschnitt 26, 28 sind im verschweißten Zustand in unterschiedlichen Ebenen angeordnet und jeweils annähernd flach ausgebildet und liegen im Wesentlichen formschlüssig an dem gebogenen Abschnitt 13b bzw. dem ebenen Abschnitt 13a des Außenwandelements 12 an.

Der erste und zweite Randabschnitt 26, 28 weisen jeweils eine Vielzahl von Ausnehmungen 34a-34f, 36a-36f auf, die sich ausgehend von einem äußeren Rand 38, 40 des ersten Randabschnitts 26 bzw. des zweiten Randabschnitts 28, der entlang der Längserstreckung des ersten Randabschnitts 26 bzw. des zweiten Randabschnitts 28 verläuft, in ein Inneres 42, 44 des ersten Randabschnitts 26, bzw. des zweiten Randabschnitts 28 hinein erstreckt. Das Innere 42, 44 des ersten bzw. zweiten Randabschnitts 26, 28 bezeichnet dabei einen Abschnitt 46, 48 des ersten bzw. zweiten Randabschnitts 26, 28, der frei von den Ausnehmungen 34a-34f, 36a-36f ist. Dadurch sind in dem ersten bzw. zweiten Randabschnitt 26, 28 Laschen 50a-50g, 52a-52g gebildet, die direkt benachbart zu dem Abschnitt 44, 46 des ersten bzw. zweiten Randabschnitts 26, 28 angeordnet sind und sich an diesen anschließen. Die Laschen 50b-50f, 52b-52f sind durch die benachbarten Ausnehmungen 34a-34f, 36a-36f und im Falle der Anfangslasche 50a, 52a bzw. der Endlasche 50g, 52g durch die benachbarte Ausnehmung 34a, 34f, 36a, 36f und eine Stirnfläche 54, 56 des Versteifungselements 16 begrenzt. Die Ausnehmung 34a-34f, 36a-36f bzw. die Laschen 50a-50g, 52a-52g sind jeweils zueinander äquidistant beabstandet angeordnet und liegen sich entlang einer Längserstreckung des Versteifungselements 16 gesehen jeweils paarweise gegenüber. Die Längserstreckung des Versteifungselements 16 entspricht der Längserstreckung des ersten bzw. zweiten Randabschnitts 26, 28 und der Längserstreckung des Rands 38, 40 des ersten bzw. zweiten Randabschnitts 26, 28.

Die Ausnehmungen 34a-34f, 36a-36g und die Laschen 50a-50g, 52a-52g weisen jeweils einen rechteckigen Querschnitt auf. Dabei entsprechen eine Längserstreckung und eine Breitenerstreckung des Querschnitts der Ausnehmungen 34a-34f, 36a-36f und der Laschen 50a-g, 52a-g der Längserstreckung bzw. einer Breitenerstreckung des ersten bzw. Randabschnitts 26, 28. Die Längserstreckung des ersten bzw. zweiten Randabschnitts 26, 28 verläuft senkrecht zur Breitenerstreckung des ersten bzw. zweiten Randabschnitts 26, 28. Eine entlang der Längserstreckung des ersten bzw. zweiten Randabschnitts 26, 28 gemessene Längserstreckung x der Ausnehmungen 34a-34f, 36a-36f ist zueinander im Wesentlichen gleich und jeweils kleiner als ein Abstand y zwischen jeweils zwei benachbarten Ausnehmungen 34a-34f bzw. 36a-36f. Dabei ist der Abstand entlang der Längserstreckung des ersten bzw. zweiten Randabschnitts 26, 28 gemessen und entspricht einer Längserstreckung der Laschen 50a-50g, 52a-52g. Eine Tiefenerstreckung T des Grundkörpers 18 ist entlang der gesamten Längserstreckung des ersten bzw. zweiten Randabschnitts 26, 28 im Wesentlichen konstant. Eine Tiefenerstreckung z der Ausnehmungen 34a-34f, 36a-36f, die einer Breitenerstreckung des Querschnitts der Ausnehmungen 34a-34f, 36a-36f entspricht, ist gleich und etwa um ein Drittel geringer als die Tiefenerstreckung T des Grundkörpers 18.

Aufnahmen 58, 60 in Form von Durchgangslöchern sind in dem Verbindungsabschnitt 20 des Grundkörper 18 beabstandet von Stirnflächen 54, 56 des Versteifungselements 16 angeordnet. Eine Einlegmutter ist jeder Aufnahme 58, 60 eingesetzt, in die ein Befestigungselement in Form einer Schraube eindrehbar ist. Ein als Platte ausgebildetes, flächiges Innenwandverkleidungselement ist mittels der Befestigungselemente an einer dem ersten und zweiten Randabschnitt 26, 28 abgewandten Seite des Verbindungsabschnitts 20 des Grundkörpers 18 des Versteifungselements 16 befestigbar, um das Versteifungselement 16 und das Außenwandelement 12 in Richtung eines Innenraums des Schienenfahrzeugs 14 optisch zu verdecken.

Optional kann der erste bzw. zweite Randabschnitt 26, 28 fünf in Fig. 2 gestrichelt dargestellte Ausbuchtungen 62a-62e bzw. 64a-64e aufweisen, die an den Laschen 50b-50f bzw. 52b-52f angeordnet und von den Laschen 50b-f, 52b-52f nach außen vorspringen. Ein Querschnitt der Ausbuchtungen 62a-62f, 64a-64f ist quadratisch. Eine Längserstreckung a der Ausbuchtungen 62a-62e, 64a-64e, die entlang der Längserstreckung des ersten bzw. zweiten Randabschnitts 26, 28 gemessen ist, ist geringer als der Abstand y. Alternativ kann die Längserstreckung a der Ausbuchtungen 62a-62e, 64a-64e im Wesentlichen identisch zu dem Abstand y sein. Die letztere Ausgestaltung entspricht einem ersten Randabschnitt 26 bzw. einem zweiten Randabschnitt 28, der eine entsprechend größere Breitenerstreckung aufweist, wobei eine Tiefenerstreckung z der Ausnehmungen 34a-34f, 36a-36f der in Figur 2 gezeigten Tiefenerstreckung z zuzüglich einer Breitenerstreckung a der Ausbuchtungen 62a-62e, 64a-64e entspricht.

Alternativ können die Ausnehmungen 34a-34f, 36a-36f konkav gewölbt ausgebildet sein. Sofern vorhanden, können die Ausbuchtungen 62a-62f, 64a-64f konvex gewölbt ausgebildet sein, so dass der Rand 38, 40 des ersten bzw. zweiten Randabschnitts 26, 28 schlangenlinienförmig ausgebildet ist.

Bei einem Verfahren zum Versteifen des Außenwandelements 12 gemäß einem Ausführungsbeispiel wird das Versteifungselement 16 derart an dem Außenwandelement 12 angeordnet, dass der erste bzw. zweite Randabschnitt 26, 28 formschlüssig an dem gewölbten Abschnitt 13b bzw. dem ersten Abschnitt 13a des Außenwandelements 12 anliegen, während der Verbindungsabschnitt 20 des Grundkörpers 18 von dem Außenwandelement 12 beabstandet angeordnet ist. Dabei können die Laschen 50a-50g, 52a-52g entsprechend der Form der Abschnitte 13a, b elastisch verformt werden, indem die Laschen 50a-50g, 52a-52g an die Abschnitte 13a, b gedrückt werden.

Das Versteifungselement 16 wird ausgehend von einer oder beiden Stirnseiten 54, 56 des Versteifungselements 16 in einem innseitigen Bereich der Aufnahmen 34a-34f, 36a-36f, also in einem Bereich einer die Ausnehmung 34a-34f, 36a-36f begrenzenden Bodenwand 66a-66f, 68a-68f, mit dem flächigen Außenwandelement 12 verschweißt. Das Versteifungselement 16 ist verschweißfrei im Bereich der Laschen 50a-50g, 52a-52g an dem Außenwandelement 12 angeordnet oder mit anderen Worten erfolgt keine Verschweißung des Versteifungselements 16 mit dem Außenwandelement 12 im Bereich der Laschen 50a-50g, 52a-52g. Insbesondere ist das Versteifungselement 16 im einem randseitigen Bereich der Aufnahmen 34a-34f, 36a-36f verschweißfrei benachbart den dem Außenwandelement 12 angeordnet. Mit anderen Worten erfolgt keine Verschweißung des Versteifungselements 16 mit dem Außenwandelement 12 in dem randseitigen Bereich der Aufnahmen 34a-34f, 36a-36f, also in einem Bereich der die Ausnehmungen 34a-34f bzw. 36a-36f begrenzenden Seitenwände 70a-70f und/oder 72a-72f bzw. 74a-74f und/oder 76a-76f des ersten bzw. zweiten Randabschnitts 26, 28.

Obwohl die Erfindung im Detail durch das bevorzugte Ausführungsbeispiel näher illustriert und beschrieben ist, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Versteifungselement (16) zum Versteifen eines flächigen Elements (12), insbesondere eines flächigen Außenwandelements (12) eines weggebundenen Fahrzeugs (14), wobei das Versteifungselement (16) aufweist:
- einen Grundkörper (18),
- einen ersten Randabschnitt (26) und
- einen zweiten Randabschnitt (28),
wobei der erste Randabschnitt (26) und der zweite Randabschnitt (28) an gegenüberliegenden Endabschnitten (30, 32) des Grundkörpers (18) angeordnet sind, wobei der erste Randabschnitt (26) und zweite Randabschnitt (28) jeweils zumindest eine Ausnehmung (34a-34f, 36a-36f) aufweisen, die sich ausgehend von einem äußeren Rand (38,40) des ersten Randabschnitts (26) bzw. des zweiten Randabschnitts (28), der sich entlang der Längserstreckung des ersten Randabschnitts (26) bzw. des zweiten Randabschnitts (28) erstreckt, in ein Inneres (42, 44) des ersten Randabschnitts (26) bzw. des zweiten Randabschnitts (28) erstreckt.

2. Versteifungselement (16) nach Anspruch 1, wobei sich die zumindest eine Ausnehmung (34a-34f, 36a-36f) des ersten Randabschnitts (26) und die zumindest eine Ausnehmung (34a-34f, 36a-36f) des zweiten Randabschnitts (28) bezüglich einer Längserstreckung des Versteifungselements (16) gesehen gegenüberliegen.

3. Versteifungselement (16) nach einem der vorherigen Ansprüche, wobei die zumindest eine Ausnehmung (34a-34f, 36a-36f) des ersten Randabschnitts (26) bzw. des zweiten Randabschnitts (28) einen viereckigen Querschnitt, insbesondere einen rechteckigen Querschnitt, weiter insbesondere einen quadratischen Querschnitt, aufweist.

4. Versteifungselement (16) nach einem der vorherigen Ansprüche, wobei die zumindest eine Ausnehmung (34a-34f, 36a-36f) des ersten Randabschnitts (26) bzw. des zweiten Randabschnitts (28) in einer Richtung zum Inneren (42, 44) des ersten Randabschnitts (26) bzw. des zweiten Randabschnitts (28) konkav gewölbt ausgebildet ist.

5. Versteifungselement (16) nach einem der vorherigen Ansprüche, wobei der erste Randabschnitt (26) und der zweite Randabschnitt (28) jeweils eine Vielzahl von Ausnehmungen (34a-34f, 36a-36f) aufweisen, wobei sich Ausnehmungen (34a-34f, 36a-36f) der Vielzahl von Ausnehmungen (34a-34f, 36a-36f) des ersten Randabschnitts (26) bzw. des zweiten Radabschnitts (28) ausgehend von dem äußeren Rand (38, 40) des ersten Randabschnitts (26) bzw. des zweiten Randabschnitts (28) in das Innere (42, 44) des ersten Randabschnitts (26) bzw. des zweiten Randabschnitts (28) erstrecken.

6. Versteifungselement (16) nach Anspruch 5, wobei eine Längserstreckung einer Ausnehmung (34a-34f, 36a-36f) des ersten Randabschnitts (26) bzw. des zweiten Randabschnitts (28), die entlang der Längserstreckung des ersten Randabschnitts (26) bzw. des zweiten Randabschnitts (28) gemessen ist, kleiner als ein Abstand zwischen benachbarten Ausnehmungen (34a-34f, 36a-36f) der Vielzahl von Ausnehmungen (34a-34f, 36a-36f) ist, der in der Richtung der Längserstreckung des ersten Randabschnitts (26) bzw. des zweiten Randabschnitts (28) gemessen ist.

7. Versteifungselement (16) nach Anspruch 5 oder 6, wobei die Ausnehmungen (34a-34f, 36a-36f) der Vielzahl von Ausnehmungen (34a-34f, 36a-36f) entlang der Längserstreckung des ersten Randabschnitts (26) bzw. des zweiten Randabschnitts (28) gesehen zueinander im Wesentlichen äquidistant beabstandet angeordnet sind.

8. Versteifungselement (16) nach einem der vorherigen Ansprüche, wobei der erste Randabschnitt (26) und/oder der zweite Randabschnitt (28) zumindest eine Ausbuchtung (62a-62e, 64a-64e) aufweisen, die bezüglich des äußeren Rands (28, 30) des ersten Randabschnitts (26) und/oder des zweiten Randabschnitts (28) nach außen vorspringt.

9. Versteifungselement (16) nach einem der vorherigen Ansprüche, wobei der Grundkörper (18) gewinkelt, insbesondere zweifach gewinkelt oder im Wesentlichen U-förmig gebogen ausgebildet ist, wobei der erste Randabschnitt (26) bzw. der zweite Randabschnitt (28) an Endabschnitten (30, 32) von Schenkeln (22, 24) des Grundkörpers (16) angeordnet und bezüglich der Schenkel (22, 24) nach außen umgebogen sind.

10. Versteifungselement (16) nach einem der vorherigen Ansprüche, wobei das Versteifungselement (16) Metall, insbesondere Blech, aufweist.

11. Versteifungselement (16) nach einem der vorherigen Ansprüche, wobei der Grundkörper (18) zumindest eine Aufnahme (58, 60) für ein Befestigungselement zum Befestigen eines weiteren Elements, insbesondere eines Innenwandverkleidungselements des weggebundenen Fahrzeugs (14), aufweist.

12. Anordnung (10) zum Versteifen eines flächigen Elements (12), insbesondere eines flächigen Außenwandelements (12) eines weggebundenen Fahrzeugs (14), wobei die Anordnung (10) aufweist:
- das flächige Element (12) und
- ein Versteifungselement (16) zum Versteifen des flächigen Elements (12) nach einem der Ansprüche 1 bis 11,
wobei das Versteifungselement (16) mit dem flächigen Element (12) in einem innenseitigen Bereich (66a-66f, 68a-68f) von zumindest einer Ausnehmung (34a-34f, 36a-36f) eines ersten Randabschnitts (26) bzw. eines zweiten Randabschnitts (28) des Versteifungselements (16) verschweißt ist, die sich ausgehend von einem äußeren Rand (38, 40) des ersten Randabschnitts (26) bzw. des zweiten Randabschnitts (28), der sich entlang der Längserstreckung des ersten Randabschnitts (26) bzw. des zweiten Randabschnitts (28) erstreckt, in ein Inneres (42, 44) des ersten Randabschnitts (26) bzw. des zweiten Randabschnitts (28) erstreckt.

13. Verfahren zum Versteifen eines flächigen Elements (12), insbesondere eines flächigen Außenwandelements (12) eines weggebundenen Fahrzeugs (14), wobei das Verfahren aufweist:
- Bereitstellen des flächigen Elements (12),
- Bereitstellen eines Versteifungselements (16) zum Versteifen des flächigen Elements (12) nach einem der Ansprüche 1 bis 11,
- Anordnen eines ersten Randabschnitts (26) und eines zweiten Randabschnitts (28) des Versteifungselements (16) an dem flächigen Element (12) und
- Verschweißen des Versteifungselements (16) mit dem flächigen Element (12) in einem innenseitigen Bereich (66a-66f, 68a-68f) von zumindest einer Ausnehmung (34a-34f, 36a-36f) des ersten Randabschnitts (26) bzw. des zweiten Randabschnitts (28), die sich ausgehend von einem äußeren Rand (38, 40) des ersten Randabschnitts (26) bzw. des zweiten Randabschnitts (28), der sich entlang der Längserstreckung des ersten Randabschnitts (26) bzw. des zweiten Randabschnitts (28) erstreckt, in ein Inneres (42, 44) des ersten Randabschnitts (26) bzw. des zweiten Randabschnitts (28) erstreckt.
